# EUROPEAN PATENT APPLICATION

(11) **EP 4 513 708 A1**
(43) Date of publication of application: **26.02.2025**
(21) Application number: 23791179.7
(22) Date of filing: 17.04.2023
(51) Int. Cl.: H02J 7/00, H02J 7/02, H02J 50/10

(54) **CHARGING CIRCUIT, CONTROL METHOD AND APPARATUS FOR CHARGING CIRCUIT, AND MOBILE TERMINAL**

(30) Priority: 22.04.2022 CN 202210433033
(71) Applicant: Vivo Mobile Communication Co., Ltd., Dongguan, Guangdong 523863 (CN)
(72) Inventor: LUO, Jian, Dongguan, Guangdong 523863 (CN); CHEN, Wei, Dongguan, Guangdong 523863 (CN)
(74) Representative: Lavoix
(86) International application number: PCT/CN2023/088653
(87) International publication number: WO 2023/202524

(57) **Abstract**

This application discloses a charging circuit, a control method and apparatus for a charging circuit, and a mobile terminal, and belongs to the technical field of electronic circuits. The charging circuit includes: a wireless charging coil, a rectifier bridge, a voltage regulator, a power management module, a voltage comparator, and a first control module. The wireless charging coil, the rectifier bridge, the voltage regulator, and the power management module are sequentially connected in series to form a charging path. The voltage regulator includes an input end and an output end. The input end of the voltage regulator is connected to the rectifier bridge, and the output end of the voltage regulator is connected to the power management module. A first input end of the voltage comparator is connected to the input end of the voltage regulator, and a second input end of the voltage comparator is connected to the output end of the voltage regulator. An input end of the first control module is connected to an output end of the voltage comparator, and an output end of the first control module is connected to the charging path.

## Description

### CROSS-REFERENCE TO RELATED APPLICATIONS

This application claims the priority of Chinese Patent Application No. 202210433033. X filed in China on April 22, 2022, the entire content of which is hereby incorporated by reference.

### TECHNICAL FIELD

This application belongs to the technical field of electronic circuits, and specifically, to a charging circuit, a control method and apparatus for a charging circuit, and a mobile terminal.

### BACKGROUND

With the development of electronic technology, wireless charging has become an important manner for charging of a mobile terminal.

A process of wireless charging of the mobile terminal is usually as follows. A wireless charging base is connected to a power supply, and the wireless charging base is in a low-voltage output state. The mobile terminal is placed on the wireless charging base. The mobile terminal is charged in a matched low-voltage slow charging mode. The wireless charging base communicates and handshakes with the mobile terminal, to determine a charging protocol of the mobile terminal. In a case that the charging protocol is fast charging, the wireless charging base is in a high-voltage output state, and the mobile terminal is charged in a matched high-voltage fast charging mode.

Based on the above charging process, there is a scenario. The mobile terminal is placed on the wireless charging base, the wireless charging base is in the high-voltage output state, and the mobile terminal is charged in the matched high-voltage fast charging mode. Then the mobile terminal is taken away by a user. The mobile terminal quickly exits the high-voltage fast charging state due to weakening of received wireless charging energy. After waiting for a specific delay according to a rule, the wireless charging base exits the high-voltage output state. The mobile terminal is put back to the wireless charging base by the user within a delay range. Because the mobile terminal has not communicated and handshaked with the wireless charging base, the mobile terminal is charged in a mismatched low-voltage slow charging mode. In this scenario, because the wireless charging base is in the high-voltage output state, and the mobile terminal is charged in the mismatched low-voltage slow charging mode, output power of the wireless charging base is much greater than power of a power supply of the mobile terminal. However, this easily causes a wireless charging integrated circuit (IC) in the mobile terminal to be burnt.

### SUMMARY

The objective of embodiments of this application is to provide a charging circuit and a mobile terminal, which can solve a problem that a wireless charging IC in the mobile terminal tends to get burnt.

According to a first aspect, an embodiment of this application provides a charging circuit, including: a wireless charging coil, a rectifier bridge, a voltage regulator, a power management module, a voltage comparator, and a first control module.

The wireless charging coil, the rectifier bridge, the voltage regulator, and the power management module are sequentially connected in series to form a charging path.

The voltage regulator includes an input end and an output end. The input end of the voltage regulator is connected to the rectifier bridge, and the output end of the voltage regulator is connected to the power management module.

A first input end of the voltage comparator is connected to the input end of the voltage regulator, and a second input end of the voltage comparator is connected to the output end of the voltage regulator.

An input end of the first control module is connected to an output end of the voltage comparator, and an output end of the first control module is connected to the charging path.

According to a second aspect, an embodiment of this application provides a control method for a charging circuit, applied to the charging circuit described in the first aspect. The control method includes:
obtaining a voltage difference from the output end of the voltage comparator, where the voltage difference is a difference between a voltage at the input end of the voltage regulator and a voltage at the output end of the voltage regulator;
controlling, in a case that the voltage difference is greater than a preset threshold, the charging path to be disconnected; and
controlling, in a case that the voltage difference is less than or equal to the preset threshold, the charging path to be conducted.

According to a third aspect, an embodiment of this application provides a control apparatus for a charging circuit, applied to the charging circuit described in the first aspect. The control apparatus includes:
an obtaining module, configured to obtain a voltage difference from the output end of the voltage comparator, where the voltage difference is a difference between a voltage at the input end of the voltage regulator and a voltage at the output end of the voltage regulator; and
a second control module, configured to: control, in a case that the voltage difference is greater than a preset threshold, the charging path to be disconnected; and
control, in a case that the voltage difference is less than or equal to the preset threshold, the charging path to be conducted.

According to a fourth aspect, an embodiment of this application provides a mobile terminal. The mobile terminal includes a charging circuit described in the first aspect, the mobile terminal includes the control apparatus for the charging circuit described in the third aspect, or the mobile terminal includes a processor and a memory. The memory stores a program or instructions executable by the processor. When the program or instructions are executed by the processor, the steps of the control method for the charging circuit described in the second aspect are implemented.

According to a fifth aspect, an embodiment of this application provides a readable storage medium. The readable storage medium stores a program or instructions. When the program or instructions are executed by a processor, the steps of the control method for the charging circuit described in the second aspect are implemented.

According to a sixth aspect, an embodiment of this application provides a chip. The chip includes a processor and a communication interface. The communication interface is coupled to the processor, and the processor is configured to run a program or instructions, to implement the steps of the control method for the charging circuit described in the second aspect.

According to a seventh aspect, an embodiment of this application provides a computer program product. The program product is stored in a storage medium, and the program product is executed by at least one processor to implement the steps of the control method for the charging circuit described in the second aspect.

In embodiments of this application, the charging circuit is provided. The charging circuit includes: the wireless charging coil, the rectifier bridge, the voltage regulator, the power management module, the voltage comparator, and the first control module. The wireless charging coil, the rectifier bridge, the voltage regulator, and the power management module are sequentially connected in series to form the charging path. The voltage regulator includes the input end and the output end. The input end of the voltage regulator is connected to the rectifier bridge, and the output end of the voltage regulator is connected to the power management module. The first input end of the voltage comparator is connected to the input end of the voltage regulator, and the second input end of the voltage comparator is connected to the output end of the voltage regulator. The input end of the first control module is connected to the output end of the voltage comparator, and the output end of the first control module is connected to the charging path. In embodiments of this application, the voltage comparator obtains the voltage difference between the input end of the voltage regulator and the output end of the voltage regulator. In a case that the first control module determines that the voltage difference is greater than the preset threshold, it is determined that the voltage difference between two ends of the voltage regulator is large. In this case, it means that a wireless charging base is in a high-voltage output state and the mobile terminal is charged in a mismatched low-voltage slow charging mode. In this case, the voltage regulator has a problem of serious heating. Further, because the voltage regulator is a component in a wireless charging IC, the wireless charging IC of the mobile terminal tends to get burnt when the voltage regulator has the problem of serious heating. In view of this, the first control module controls the charging path to be disconnected, to prevent the voltage regulator from continuing to be energized. On this basis, the voltage regulator starts to cool down because of being in a non-working state, which avoids the case that the wireless charging IC of the mobile terminal tends to get burnt.

### BRIEF DESCRIPTION OF THE DRAWINGS

FIG. 1 is a diagram 1 of a structure of a charging circuit according to an embodiment of this application;
FIG. 2 is a diagram 2 of a structure of a charging circuit according to an embodiment of this application;
FIG. 3 is a diagram 3 of a structure of a charging circuit according to an embodiment of this application;
FIG. 4 is a diagram 4 of a structure of a charging circuit according to an embodiment of this application;
FIG. 5 is a diagram 5 of a structure of a charging circuit according to an embodiment of this application;
FIG. 6 is a diagram 6 of a structure of a charging circuit according to an embodiment of this application;
FIG. 7 is a flowchart of a control method for a charging circuit according to an embodiment of this application;
FIG. 8 is a diagram of a structure of a control apparatus for a charging circuit according to an embodiment of this application;
FIG. 9 is a diagram of a structure of a mobile terminal according to an embodiment of this application; and
FIG. 10 is a diagram of a hardware structure of a mobile terminal according to an embodiment of this application.

### Reference numerals:

100 - Charging circuit; 110 - wireless charging coil; 123 - wireless charging chip;
120 - rectifier bridge; 130 - voltage regulator; 140 - power management module;
150 - voltage comparator; 160 - first control module; 170 - first switch;
180 - second switch; and 190 - third switch.

### DETAILED DESCRIPTION

The technical solutions in embodiments of this application are clearly described in the following with reference to the accompanying drawings in embodiments of this application. It is clear that the described embodiments are merely some rather than all of embodiments of this application. All other embodiments obtained by a person skilled in the art based on embodiments of this application fall within the protection scope of this application.

The terms "first", "second", and the like in the specification and claims of this application are used to distinguish between similar objects, but are not used to describe a specific sequence or order. It should be understood that data used in this way are exchangeable in a proper case, so that embodiments of this application can be implemented in an order other than the order shown or described herein. In addition, objects distinguished by "first", "second", and the like are usually of one type, and a quantity of the objects is not limited. For example, a first object may be one or more. In addition, "and/or" in the specification and the claims indicates at least one of the connected objects, and the character "/" usually indicates an "or" relationship between the associated objects.

With reference to the accompanying drawings, in specific embodiments and application scenarios thereof, a charging circuit, a control method and apparatus for a charging circuit, and a mobile terminal according to embodiments of this application are described in detail.

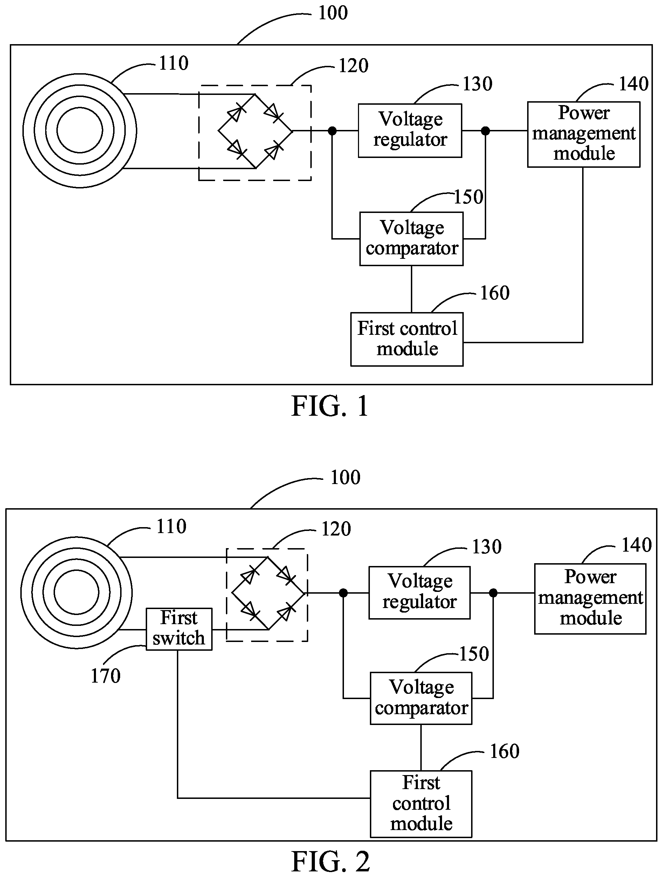

An embodiment of this application provides a charging circuit 100, as shown in FIG. 1, including: a wireless charging coil 110, a rectifier bridge 120, a voltage regulator 130, a power management module 140, a voltage comparator 150, and a first control module 160.

The wireless charging coil 110, the rectifier bridge 120, the voltage regulator 130, and the power management module 140 are sequentially connected in series to form a charging path.

The voltage regulator 130 includes an input end and an output end. The input end of the voltage regulator 130 is connected to the rectifier bridge 120, and the output end of the voltage regulator 130 is connected to the power management module 140.

A first input end of the voltage comparator 150 is connected to the input end of the voltage regulator 130, and a second input end of the voltage comparator 150 is connected to the output end of the voltage regulator 130.

An input end of the first control module 160 is connected to an output end of the voltage comparator 150, and an output end of the first control module 160 is connected to the charging path.

It should be noted that, FIG. 1 shows an example in which the output end of the first control module 160 is connected to an enable end of the power management module 140, to achieve connection of the output end of the first control module 160 to the charging path.

In this embodiment of this application, the output end of the first control module 160 is connected to the charging path, so that the charging path is controlled to be conducted or disconnected.

In this embodiment of this application, the wireless charging coil 110 includes a first terminal and a second terminal. The wireless charging coil 110 is configured to receive wireless charging energy emitted by a wireless charging base, and transmit the wireless charging energy to the rectifier bridge 120 through the first terminal and the second terminal.

The rectifier bridge 120 includes a first input end, a second input end, and an output end. The first input end of the rectifier bridge 120 is connected to the first terminal of the wireless charging coil 110, and the second input end of the rectifier bridge 120 is connected to the second terminal of the wireless charging coil 110. The rectifier bridge 120 is configured to rectify, into a direct current voltage, the wireless charging energy received from the wireless charging coil 110, and output the direct current voltage to the input end of the voltage regulator 130 through the output end of the rectifier bridge 120.

In one embodiment of this application, a structure of the rectifier bridge 120 may be shown in FIG. 1.

The voltage regulator 130 regulates the direct current voltage output from the rectifier bridge 120, and outputs, to the power management module 140 through the output end of the voltage regulator 130, a voltage required by the power management module 140.

In one embodiment of this application, the voltage regulator 130 is a low-dropout linear voltage regulator (Low-Dropout Regulator, LDO).

In this embodiment of this application, in a case that the voltage regulator 130 is the low-dropout linear voltage regulator, the voltage regulator 130 has low costs and high voltage regulation efficiency.

The power management module 140 manages a power supply module in a mobile terminal based on the voltage output by the voltage regulator 130.

In one embodiment of this application, the power management module 140 is an integrated power management circuit PMIC (Power Management IC, PMIC).

The first input end of the voltage comparator 150 is connected to the input end of the voltage regulator 130, and the second input end of the voltage comparator 150 is connected to the output end of the voltage regulator 130. The voltage comparator 150 is configured to obtain a voltage difference between the input end of the voltage regulator 130 and the output end of the voltage regulator 130, and output the voltage difference at the output end of the voltage comparator 150.

The input end of the first control module 160 is connected to the output end of the voltage comparator 150, to obtain the voltage difference output by the voltage comparator 150. Further, in a case that the first control module 160 determines that the voltage difference is greater than a preset threshold, it is determined that the voltage difference between two ends of the voltage regulator 130 is large. In this case, it means that the wireless charging base is in a high-voltage output state and the mobile terminal is charged in a mismatched low-voltage slow charging mode. In this case, the voltage regulator 130 has a problem of serious heating. Further, because the voltage regulator 130 is a component in a wireless charging IC, where the wireless charging IC is also referred to as a wireless charging chip, the wireless charging IC of the mobile terminal tends to get burnt when the voltage regulator 130 has the problem of serious heating. In view of this, the first control module 160 controls the charging path to be disconnected, to prevent the voltage regulator 130 from continuing to be energized. On this basis, the voltage regulator 130 starts to cool down because of being in a non-working state, which avoids the case that the wireless charging IC of the mobile terminal tends to get burnt.

Correspondingly, in a case that the first control module 160 determines that the voltage difference is less than or equal to the preset threshold, it is determined that the voltage difference between the two ends of the voltage regulator 130 is small. In this case, it means that the wireless charging base is in the high-voltage output state and the mobile terminal is charged in a matched high-voltage fast charging mode, the wireless charging base is in a low-voltage output state and the mobile terminal is charged in a matched low-voltage slow charging mode, or the mobile terminal is in an uncharged state because of not being placed on the wireless charging base. In this case, the voltage regulator 130 does not have the problem of serious heating, so that the wireless charging IC of the mobile terminal does not have a problem of getting burnt. In view of this, the first control module 160 controls the charging path to be conducted, to ensure that the charging circuit 100 can be normally charged.

In one embodiment of this application, the first control module 160 is any one of a CPU, an MCU, or a PMIC.

In this embodiment of this application, the first control module 160 is implemented by any one of a central processing unit (Central Processing Unit, CPU), a micro control unit (Micro Control Unit, MCU), or a PMIC, so that the first control module 160 is easy to implement.

In this embodiment of this application, the charging circuit is provided and includes: the wireless charging coil, the rectifier bridge, the voltage regulator, the power management module, the voltage comparator, and the control module. The wireless charging coil, the rectifier bridge, the voltage regulator, and the power management module are sequentially connected in series to form the charging path. The voltage regulator includes the input end and the output end. The input end of the voltage regulator is connected to the rectifier bridge, and the output end of the voltage regulator is connected to the power management module. The first input end of the voltage comparator is connected to the input end of the voltage regulator, and the second input end of the voltage comparator is connected to the output end of the voltage regulator. The input end of the control module is connected to the output end of the voltage comparator, and the output end of the control module is connected to the charging path. In this embodiment of this application, the voltage comparator obtains the voltage difference between the input end of the voltage regulator and the output end of the voltage regulator. In the case that the control module determines that the voltage difference is greater than the preset threshold, it is determined that the voltage difference between the two ends of the voltage regulator is large. In this case, it means that the wireless charging base is in the high-voltage output state and the mobile terminal is charged in the mismatched low-voltage slow charging mode. In this case, the voltage regulator has the problem of serious heating. Further, because the voltage regulator is a component in a wireless charging IC, the wireless charging IC of the mobile terminal tends to get burnt when the voltage regulator has the problem of serious heating. In view of this, the control module controls the charging path to be disconnected, to prevent the voltage regulator from being continuously energized. On this basis, the voltage regulator starts to cool down because of being in a non-working state, which avoids the case that the wireless charging IC of the mobile terminal tends to get burnt.

In one embodiment of this application, the preset threshold may be specifically a test value. The test value may be specifically the voltage difference between the input end of the voltage regulator 130 and the output end of the voltage regulator 130 in a case of the serious heating of the voltage regulator 130.

In another embodiment of this application, the preset threshold may alternatively be a specification value. The specification value may be specifically: a difference between a maximum input voltage of the voltage regulator 130 and a minimum output voltage of the voltage regulator 130.

In one embodiment of this application, the first control module 160 controls, in the case that the voltage difference is greater than the preset threshold, the charging path to be disconnected. This may be specifically as follows. The first control module 160 controls, in the case that the voltage difference is greater than the preset threshold, the charging path to be disconnected within a preset time period.

In one embodiment of this application, the preset time period may be a test value. The test value may be specifically a time period for the voltage regulator 130 or the wireless charging IC where the voltage regulator 130 is located to cool down to a safe temperature.

In another embodiment of this application, the preset time period may alternatively be a corresponding waiting delay for the wireless charging base to exit the high-voltage output state, or is a time period greater than the delay.

It can be learned from the foregoing that the first control module 160 controls, in the case that the voltage difference is greater than the preset threshold, the charging path to be disconnected within the preset time period. After the preset time period, the voltage regulator 130 or the wireless charging IC where the voltage regulator 130 is located is at the safe temperature, or the wireless charging base exits the high-voltage output state. Therefore, this avoids the case that the wireless charging IC of the mobile terminal tends to get burnt.

In one embodiment of this application, as shown in FIG. 2, a charging circuit 100 further includes a first switch 170.

The first switch 170 is connected between a wireless charging coil 110 and a rectifier bridge 120.

An output end of a first control module 160 is connected to a control end of the first switch 170.

The first control module 160 is configured to control the first switch to be turned on or off.

In this embodiment of this application, the output end of the first control module 160 is connected to the control end of the first switch 170, to achieve connection of the output end of the first control module 160 to a charging path.

In this embodiment of this application, the first control module 160 controls, in a case that a voltage difference is greater than a preset threshold, the first switch 170 to be turned off. Correspondingly, the first control module 160 controls, in a case that the voltage difference is less than or equal to the preset threshold, the first switch 170 to be turned on.

In this embodiment of this application, that the first switch 170 is connected between the wireless coil and the rectifier bridge 120 may be specifically as follows. The first switch 170 is connected between a first terminal of the wireless charging coil 110 and a first input end of the rectifier bridge 120, or the first switch 170 is connected between a second terminal of the wireless charging coil 110 and a second input end of the rectifier bridge 120.

In one embodiment of this application, the first switch 170 may be a metal-oxide-semiconductor field-effect transistor (Metal-Oxide-Semiconductor Field-Effect Transistor, MOSFET), such as an N-metal-oxide-semiconductor (N-Metal-Oxide-Semiconductor, NMOS) transistor. Certainly, the first switch 170 may alternatively be a switching IC. For example, the first switch 170 is the NMOS transistor, and the first switch 170 is connected between the first terminal of the wireless charging coil 110 and the first input end of the rectifier bridge 120. A gate of the NMOS transistor is connected to the output end of the first control module 160, a drain of the NMOS transistor is connected to the first terminal of the wireless charging coil 110, and a source of the NMOS transistor is connected to the first input end of the rectifier bridge 120.

In this embodiment of this application, the first control module 160 controls, in the case that the voltage difference is greater than the preset threshold, the first switch 170 to be turned off, so that a path between the wireless charging coil 110 and the rectifier bridge 120 can be disconnected, and then the charging path is disconnected. Correspondingly, the first control module 160 controls, in the case that the voltage difference is less than or equal to the preset threshold, the first switch 170 to be turned on, so that the path between the wireless charging coil 110 and the rectifier bridge 120 can be conducted, and then the charging path is conducted.

In this embodiment of this application, the first switch 170 is provided, and the first switch 170 is connected between the wireless charging coil 110 and the rectifier bridge 120. The first control module 160 controls, by controlling the first switch 170 to be turned off, the charging path to be disconnected, and the first control module 160 controls, by controlling the first switch 170 to be turned on, the charging path to be conducted. In this way, because the first switch 170 can be easily designed between the wireless charging coil 110 and the rectifier bridge 120, difficulty of designing the charging circuit 100 provided in this embodiment is low. In addition, because costs of the first switch 170 are low, costs of the charging circuit 100 provided in this embodiment of this application are low.

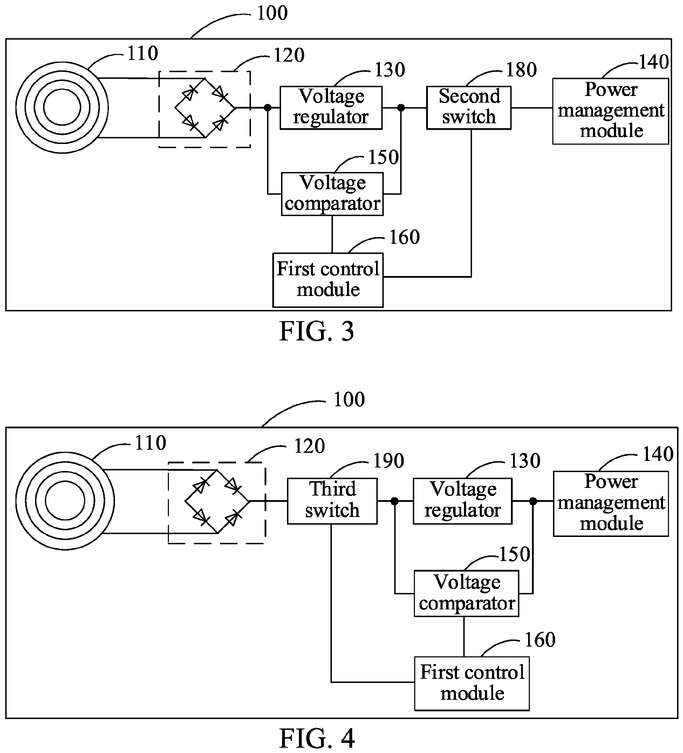

In one embodiment of this application, as shown in FIG. 3, a charging circuit 100 further includes a second switch 180.

The second switch 180 is connected between a voltage regulator 130 and a power management module 140.

An output end of a first control module 160 is connected to a control end of the second switch 180.

The first control module 160 is configured to control the second switch 180 to be turned on or off.

In this embodiment of this application, the output end of the first control module 160 is connected to the control end of the second switch 180, to achieve connection of the output end of the first control module 160 to a charging path.

In this embodiment of this application, the first control module 160 controls, in a case that a voltage difference is greater than a preset threshold, the second switch 180 to be turned off. Correspondingly, the first control module 160 controls, in a case that the voltage difference is less than or equal to the preset threshold, the second switch 180 to be turned on.

In this embodiment of this application, descriptions of the second switch 180 are the same as the descriptions of the first switch 170 in the embodiment shown in FIG. 2, and details are not described herein again.

In this embodiment of this application, the first control module 160 controls, in the case that the voltage difference is greater than the preset threshold, the second switch 180 to be turned off, so that a path between an output end of the voltage regulator 130 and the power management module 140 can be disconnected, and then the charging path is disconnected. Correspondingly, the first control module 160 controls, in the case that the voltage difference is less than or equal to the preset threshold, the second switch 180 to be turned on, so that the path between the output end of the voltage regulator 130 and the power management module 140 can be conducted, and then the charging path is conducted.

In this embodiment of this application, the second switch 180 is provided, and the second switch 180 is connected between the voltage regulator 130 and the power management module 140. The first control module 160 controls, by controlling the second switch 180 to be turned off, the charging path to be disconnected, and the first control module 160 controls, by controlling the second switch 180 to be turned on, the charging path to be conducted. In this way, because the second switch 180 can be easily designed between the voltage regulator 130 and the power management module 140, difficulty of designing the charging circuit 100 provided in this embodiment is low. In addition, because costs of the second switch 180 are low, costs of the charging circuit 100 provided in this embodiment of this application are low.

In one embodiment of this application, as shown in FIG. 4, a charging circuit 100 further includes a third switch 190.

The third switch 190 is connected between a rectifier bridge 120 and a voltage regulator 130.

An output end of a first control module 160 is connected to a control end of the third switch 190.

The first control module 160 is configured to control the third switch 190 to be turned on or off.

In this embodiment of this application, the output end of the first control module 160 is connected to the control end of the third switch 190, to achieve connection of the output end of the first control module 160 to a charging path.

In this embodiment of this application, the first control module 160 controls, in a case that a voltage difference is greater than a preset threshold, the third switch 190 to be turned off. Correspondingly, the first control module 160 controls, in a case that the voltage difference is less than or equal to the preset threshold, the third switch 190 to be turned on.

In this embodiment of this application, descriptions of the third switch 190 are the same as the descriptions of the first switch 170 in the embodiment shown in FIG. 2, and details are not described herein again.

In this embodiment of this application, the first control module 160 controls, in the case that the voltage difference is greater than the preset threshold, the third switch 190 to be turned off, so that a path between the rectifier bridge 120 and an input end of the voltage regulator 130 can be disconnected, and then the charging path is conducted. Correspondingly, the first control module 160 controls, in the case that the voltage difference is less than or equal to the preset threshold, the third switch 190 to be turned on, so that the path between the rectifier bridge 120 and the input end of the voltage regulator 130 can be disconnected, and then the charging path is conducted.

In this embodiment of this application, the third switch 190 is provided, and the third switch 190 is connected between the rectifier bridge 120 and the input end of the voltage regulator 130. The first control module 160 controls, by controlling the third switch 190 to be turned off, the charging path to be disconnected, and the first control module 160 controls, by controlling the third switch 190 to be turned on, the charging path to be conducted. In this way, because the third switch 190 can be easily designed between the voltage regulator 130 and the power management module 140, difficulty of designing the charging circuit 100 provided in this embodiment is low. In addition, because costs of the third switch 190 are low, costs of the charging circuit 100 provided in this embodiment of this application are low.

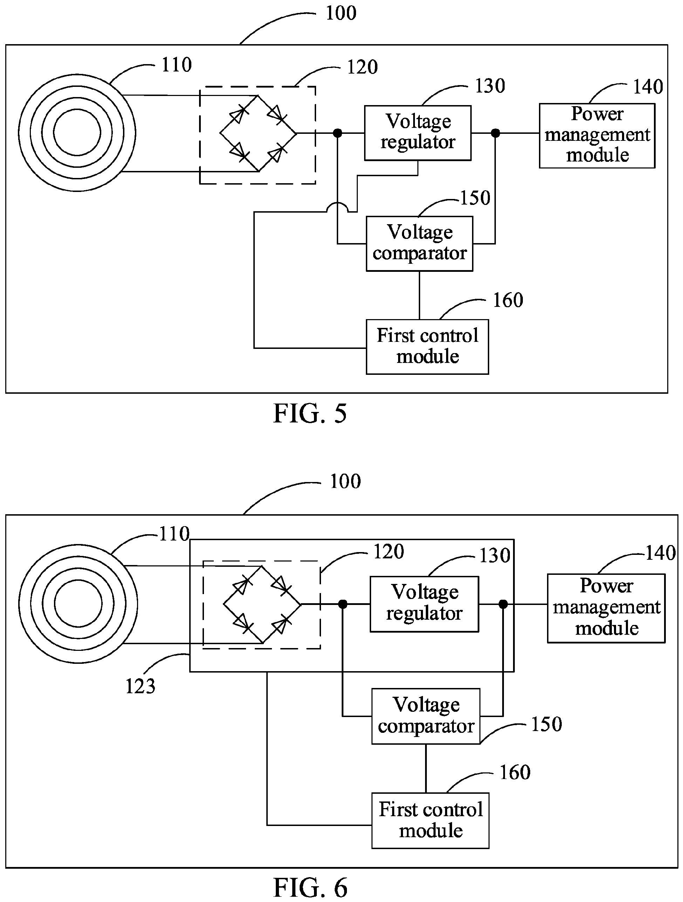

In one embodiment of this application, as shown in FIG. 5, an output end of a first control module 160 is connected to an enable end of a voltage regulator 130. The first control module 160 is configured to control the voltage regulator 130 to be in a turned-off or turned-on state.

In this embodiment of this application, the output end of the first control module 160 is connected to the enable end of the voltage regulator 130, to achieve connection of the output end of the first control module 160 to a charging path.

In this embodiment of this application, the first control module 160 controls, in a case that a voltage difference is greater than a preset threshold, the voltage regulator 130 to be in the turned-off state. Correspondingly, the first control module 160 controls, in a case that the voltage difference is less than or equal to the preset threshold, the voltage regulator 130 to be in the turned-on state.

In this embodiment of this application, the first control module 160 controls, in the case that the voltage difference is greater than the preset threshold, the voltage regulator 130 to be in the turned-off state. In this case, because the voltage regulator 130 is in the turned-off state, a path between a rectifier bridge 120 and a power management module 140 is disconnected, so that the charging path is disconnected. Correspondingly, the first control module 160 controls, in the case that the voltage difference is less than or equal to the preset threshold, the voltage regulator 130 to be in the turned-on state. In this case, because the voltage regulator 130 is in the turned-on state, the path between the rectifier bridge 120 and the power management module 140 is conducted, so that the charging path is conducted.

In this embodiment of this application, the voltage regulator 130 is controlled to be in the turned-off state, so that the charging path is controlled to be disconnected, and the voltage regulator 130 is controlled to be in the turned-on state, so that the charging path is controlled to be conducted. Because the voltage regulator 130 is a necessary component in the conventional charging circuit, the first control module 160 can control the charging path to be disconnected or conducted in this embodiment, without providing an additional component. This reduces costs of the charging circuit 100 provided in this embodiment of this application.

In one embodiment of this application, as shown in FIG. 6, a rectifier bridge 120 and a voltage regulator 130 are integrated on a wireless charging chip 123, and an output end of a first control module 160 is connected to an enable end of the wireless charging chip 123.

The first control module 160 is configured to control the voltage regulator to be turned on or off.

In this embodiment of this application, the output end of the first control module 160 is connected to the enable end of the wireless charging chip 123, so that the output end of the first control module 160 is connected to a charging path.

In this embodiment of this application, the first control module 160 transmits a target instruction to the wireless charging chip 123 in a case that a voltage difference is greater than a preset threshold. The wireless charging chip 123 controls, based on the target instruction, the voltage regulator 130 to be in a turned-off state. Correspondingly, in a case that the voltage difference is less than or equal to the preset threshold, the first control module 160 sends, to the wireless charging chip 123, an instruction indicating that the wireless charging chip 123 controls the voltage regulator 130 to be in a turned-on state. The wireless charging chip 123 controls, based on the instruction, the voltage regulator 130 to be in the turned-on state.

In this embodiment, the target instruction is an instruction indicating that the wireless charging chip 123 controls the voltage regulator 130 to be in the turned-off state.

In this embodiment of this application, the rectifier bridge 120 and the voltage regulator 130 are integrated on the wireless charging chip 123. The first control module 160 transmits the target instruction to the wireless charging chip 123 in the case that the voltage difference is greater than the preset threshold, to indicate that the wireless charging chip 123 controls the voltage regulator 130 to be in the turned-off state. The wireless charging chip 123 controls, based on the target instruction, the voltage regulator 130 to be in the turned-off state. In this way, because the voltage regulator 130 is in the turned-off state, a path between the rectifier bridge 120 and a power management module 140 is disconnected, so that the charging path is disconnected.

Correspondingly, in the case that the voltage difference is less than or equal to the preset threshold, the first control module 160 sends, to the wireless charging chip 123, the instruction indicating that the wireless charging chip 123 controls the voltage regulator 130 to be in the turned-on state. The wireless charging chip 123 controls, based on the instruction, the voltage regulator 130 to be in the turned-on state. In this way, because the voltage regulator 130 is in the turned-on state, the path between the rectifier bridge 120 and the power management module 140 is conducted, so that the charging path is conducted.

In this embodiment of this application, because the rectifier bridge 120 and the voltage regulator 130 are integrated in the existing wireless charging chip 123, and the enable end, a first end connected to an input end of the voltage regulator 130, and a second end connected to an output end of the voltage regulator 130 are externally provided on the wireless charging chip 123, the first control module 160 controls, through the wireless charging chip 123 by sending the target instruction to the wireless charging chip 123, the voltage regulator 130 to be in the turned-off state, so that the charging path is disconnected. In this way, the existing wireless charging chip 123 can be directly used, without changing a hardware structure of the existing wireless charging chip 123. In this way, difficulty of designing the charging circuit 100 provided in this embodiment of this application can be reduced.

In one embodiment of this application, as shown in FIG. 1, an output end of a first control module 160 is connected to an enable end of a power management module 140.

The first control module 160 is configured to control a charging management function of the power management module 140 to be turned on or off.

In this embodiment of this application, the output end of the first control module 160 is connected to the enable end of the power management module 140, so that the output end of the first control module 160 is connected to a charging path.

In this embodiment of this application, the first control module 160 controls, in a case that a voltage difference is greater than a preset threshold, the charging management function of the power management module 140 to be turned off.

Correspondingly, the first control module 160 controls, in a case that the voltage difference is less than or equal to the preset threshold, the charging management function of the power management module 140 to be turned on.

In this embodiment of this application, a specific implementation in which the first control module 160 controls the charging management function of the power management module 140 to be turned off may be as follows.

In a case that the first control module 160 is an MCU or a CPU, the first control module 160 sends, to the power management module 140, an instruction indicating the power management module 140 to turn off the charging management function. The power management module 140 controls, based on the instruction, the charging management function of the power management module 140 to be turned off.

Alternatively, in a case that the first control module 160 is a PMIC, that is, in a case that the first control module 160 and the power management module 140 are the same one, the power management module 140 controls the charging management function of the power management module 140 to be turned off.

In this embodiment of this application, a specific implementation in which the first control module 160 controls the charging management function of the power management module 140 to be turned on may be as follows.

In a case that the first control module 160 is an MCU or a CPU, the first control module 160 sends, to the power management module 140, an instruction indicating the power management module 140 to turn on the charging management function. The power management module 140 controls, based on the instruction, the charging management function of the power management module 140 to be turned on.

Alternatively, in a case that the first control module 160 is a PMIC, that is, in a case that the first control module 160 and the power management module 140 are the same one, the power management module 140 controls the charging management function of the power management module 140 to be turned on.

In this embodiment of this application, the first control module 160 controls, in the case that the voltage difference is greater than the preset threshold, the charging management function of the power management module 140 to be turned off. In this case, because the charging management function of the power management module 140 is turned off, the power management module 140 is in an uncharged state. This causes the charging path to be disconnected. Correspondingly, the first control module 160 controls, in the case that the voltage difference is less than or equal to the preset threshold, the charging management function of the power management module 140 to be turned on. In this case, because the charging management function of the power management module 140 is turned on, the power management module 140 is in a charged state. This causes the charging path to be conducted.

In this embodiment of this application, the charging management function of the power management module 140 is controlled to be turned off, so that the charging path is controlled to be disconnected. Because the power management module 140 is a necessary component in the existing charging path, the first control module 160 can control the charging path to be disconnected in this embodiment, without providing an additional component. This reduces costs of a charging circuit 100 provided in this embodiment of this application.

An embodiment of this application further provides a control method for a charging circuit. The method is applied to the charging circuit 100 provided in any one of the foregoing embodiments.

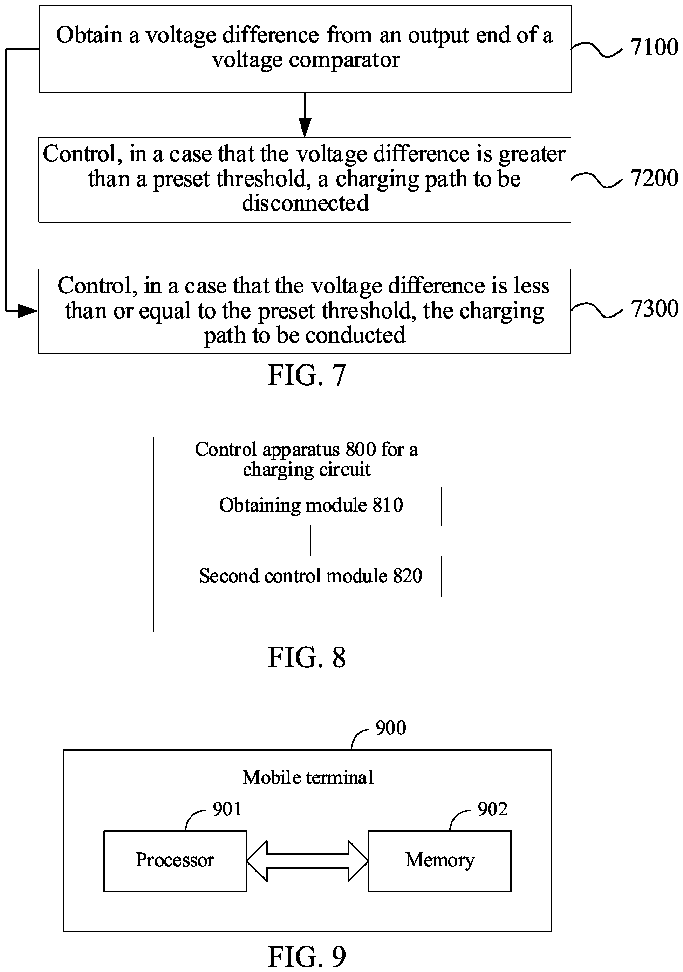

As shown in FIG. 7, the control method for a charging circuit provided in this embodiment of this application includes the following S7100 to S7300.

S7100: Obtain a voltage difference from the output end of the voltage comparator 150, where the voltage difference is a difference between a voltage at the input end of the voltage regulator 130 and a voltage at the output end of the voltage regulator 130.

S7200: Control, in a case that the voltage difference is greater than a preset threshold, the charging path to be disconnected.

S7300: Control, in a case that the voltage difference is less than or equal to the preset threshold, the charging path to be conducted.

In this embodiment of this application, in a case that it is determined that the voltage difference is greater than the preset threshold, it is determined that the voltage difference between two ends of the voltage regulator 130 is large. In this case, it means that a wireless charging base is in a high-voltage output state and a mobile terminal is charged in a mismatched low-voltage slow charging mode. In this case, the voltage regulator 130 has a problem of serious heating. Further, because the voltage regulator 130 is a component in a wireless charging IC, the wireless charging IC of the mobile terminal tends to get burnt when the voltage regulator 130 has the problem of serious heating. In view of this, the charging path is controlled to be disconnected, to prevent the voltage regulator 130 from being continuously energized. On this basis, the voltage regulator 130 starts to cool down because of being in a non-working state, which avoids the case that the wireless charging IC of the mobile terminal tends to get burnt.

Correspondingly, in a case that it is determined that the voltage difference is less than or equal to the preset threshold, it is determined that the voltage difference between the two ends of the voltage regulator 130 is small. In this case, it means that the wireless charging base is in the high-voltage output state and the mobile terminal is charged in a matched high-voltage fast charging mode, the wireless charging base is in a low-voltage output state and the mobile terminal is charged in a matched low-voltage slow charging mode, or the mobile terminal is in an uncharged state because of not being placed on the wireless charging base. In this case, the voltage regulator 130 does not have the problem of serious heating, so that the wireless charging IC of the mobile terminal does not have a problem of getting burnt. In view of this, the charging path is controlled to be conducted, to ensure that the charging circuit 100 can be normally charged.

In one embodiment of this application, a specific implementation of S7200 may be: Control, in the case that the voltage difference is greater than the preset threshold, the charging path to be disconnected within a preset time period.

In one embodiment of this application, in a case that the charging circuit 100 includes a first switch 170, a specific implementation of S7200 may be: Control, in the case that the voltage difference is greater than the preset threshold, the first switch 170 to be turned off.

A specific implementation of S7300 may be: Control, in the case that the voltage difference is less than or equal to the preset threshold, the first switch 170 to be turned on.

In one embodiment of this application, in a case that the charging circuit 100 includes a second switch 180, a specific implementation of S7200 may be: Control, in the case that the voltage difference is greater than the preset threshold, the second switch 180 to be turned off.

A specific implementation of S7300 may be: Control, in the case that the voltage difference is less than or equal to the preset threshold, the second switch 180 to be turned on.

In one embodiment of this application, in a case that a rectifier bridge 120 and the voltage regulator 130 are integrated on a wireless charging chip 123, a specific implementation of S7200 may be: Control, in the case that the voltage difference is greater than the preset threshold, the voltage regulator 130 to be turned off.

A specific implementation of S7300 may be: Control, in the case that the voltage difference is less than or equal to the preset threshold, the voltage regulator 130 to be turned on.

In one embodiment of this application, a specific implementation of S7200 may be: Control, in the case that the voltage difference is greater than the preset threshold, a charging management function of a power management module 140 to be turned off.

A specific implementation of S7300 may be: Control, in the case that the voltage difference is less than or equal to the preset threshold, the charging management function of the power management module 140 to be turned on.

In one embodiment of this application, in a case that the charging circuit 100 includes a third switch 190, a specific implementation of S7200 may be: Control, in the case that the voltage difference is greater than the preset threshold, the third switch 190 to be turned off.

A specific implementation of S7300 may be: Control, in the case that the voltage difference is less than or equal to the preset threshold, the third switch 190 to be turned on.

It should be noted that, specific implementations of the steps described above may be referred to the specific implementations of the control module in the charging circuit 100 described above, and details are not described herein again.

The control method for a charging circuit provided in this embodiment of this application may be executed by a control apparatus for a charging circuit. In this embodiment of this application, an example in which the control apparatus for a charging circuit executes the control method for a charging circuit is used as an example, to describe the control apparatus for a charging circuit provided in this embodiment of this application.

An embodiment of this application provides a control apparatus 800 for a charging circuit, applied to the charging circuit 100 provided in any of the foregoing embodiments. As shown in FIG. 8, the control apparatus 800 includes: an obtaining module 810 and a second control module 820.

The obtaining module 810 is configured to obtain a voltage difference from the output end of the voltage comparator, where the voltage difference is a difference between a voltage at the input end of the voltage regulator and a voltage at the output end of the voltage regulator.

The second control module 820 is configured to: control, in a case that the voltage difference is greater than a preset threshold, the charging path to be disconnected; and
control, in a case that the voltage difference is less than or equal to the preset threshold, the charging path to be conducted.

In this embodiment of this application, the obtaining module 810 is configured to obtain the voltage difference from the output end of the voltage comparator, where the voltage difference is the difference between the voltage at the input end of the voltage regulator and the voltage at the output end of the voltage regulator. In a case that the second control module 820 determines that the voltage difference is greater than the preset threshold, it is determined that the voltage difference between two ends of the voltage regulator 130 is large. In this case, it means that a wireless charging base is in a high-voltage output state and a mobile terminal is charged in a mismatched low-voltage slow charging mode. In this case, the voltage regulator 130 has a problem of serious heating. Further, because the voltage regulator 130 is a component in a wireless charging IC, the wireless charging IC of the mobile terminal tends to get burnt when the voltage regulator 130 has the problem of serious heating. In view of this, the charging path is controlled to be disconnected, to prevent the voltage regulator 130 from being continuously energized. On this basis, the voltage regulator 130 starts to cool down because of being in a non-working state, which avoids the case that the wireless charging IC of the mobile terminal tends to get burnt.

Correspondingly, in a case that the second control module 820 determines that the voltage difference is less than or equal to the preset threshold, it is determined that the voltage difference between the two ends of the voltage regulator 130 is small. In this case, it means that the wireless charging base is in the high-voltage output state and the mobile terminal is charged in a matched high-voltage fast charging mode, the wireless charging base is in a low-voltage output state and the mobile terminal is charged in a matched low-voltage slow charging mode, or the mobile terminal is in an uncharged state because of not being placed on the wireless charging base. In this case, the voltage regulator 130 does not have the problem of serious heating, so that the wireless charging IC of the mobile terminal does not have a problem of getting burnt. In view of this, the charging path is controlled to be conducted, to ensure that the charging circuit 100 can be normally charged.

In one embodiment of this application, the second control module 820 is specifically configured to: control, in the case that the voltage difference is greater than the preset threshold, the charging path to be disconnected within a preset time period.

In one embodiment of this application, in a case that the charging circuit 100 includes a first switch 170, the second control module 820 is specifically configured to: control, in the case that the voltage difference is greater than the preset threshold, the first switch 170 to be turned off; or control, in the case that the voltage difference is less than or equal to the preset threshold, the first switch 170 to be turned on.

In one embodiment of this application, in a case that the charging circuit 100 includes a second switch 180, the second control module 820 is specifically configured to: control, in the case that the voltage difference is greater than the preset threshold, the second switch 180 to be turned off; or control, in the case that the voltage difference is less than or equal to the preset threshold, the second switch 180 to be turned on.

In one embodiment of this application, in a case that a rectifier bridge 120 and the voltage regulator 130 are integrated on a wireless charging chip 123, the second control module 820 is specifically configured to: control, in the case that the voltage difference is greater than the preset threshold, the voltage regulator 130 to be turned off; or control, in the case that the voltage difference is less than or equal to the preset threshold, the voltage regulator 130 to be turned on.

In one embodiment of this application, the second control module 820 is specifically configured to: control, in the case that the voltage difference is greater than the preset threshold, a charging management function of a power management module 140 to be turned off; or control, in the case that the voltage difference is less than or equal to the preset threshold, a charging management function of a power management module 140 to be turned on.

In one embodiment of this application, in a case that the charging circuit 100 includes a third switch 190, the second control module 820 is specifically configured to: control, in the case that the voltage difference is greater than the preset threshold, the third switch 190 to be turned off; or control, in the case that the voltage difference is less than or equal to the preset threshold, the third switch 190 to be turned on.

The control apparatus 800 for a charging circuit in this embodiment of this application may be a mobile terminal, or may be a component such as an integrated circuit or a chip in a mobile terminal. For example, the mobile terminal may be an electronic device, such as a mobile phone, a tablet computer, a notebook computer, a palmtop computer, or a wearable device, that can be wirelessly charged. This is not specifically limited in embodiments of this application.

The control apparatus for a charging circuit in this embodiment of this application may be an apparatus having an operating system. The operating system may be an Android (Android) operating system, may be an iOS operating system, or may be another possible operating system. This is not specifically limited in embodiments of this application.

The control apparatus 800 for a charging circuit provided in this embodiment of this application can implement the processes implemented in the method embodiments of FIG. 7. To avoid repetition, details are not described herein again.

Optionally, an embodiment of this application further provides a mobile terminal 900. The mobile terminal 900 includes the control apparatus 800 for a charging circuit provided in any one of the foregoing embodiments.

Alternatively, as shown in FIG.9, the mobile terminal includes a processor 901 and a memory 902. The memory 902 stores a program or instructions executable by the processor 901. When the program or instructions are executed by the processor 901, the steps in embodiments of the control method for a charging circuit described above are implemented, and the same technical effects can be achieved. To avoid repetition, details are not described herein again.

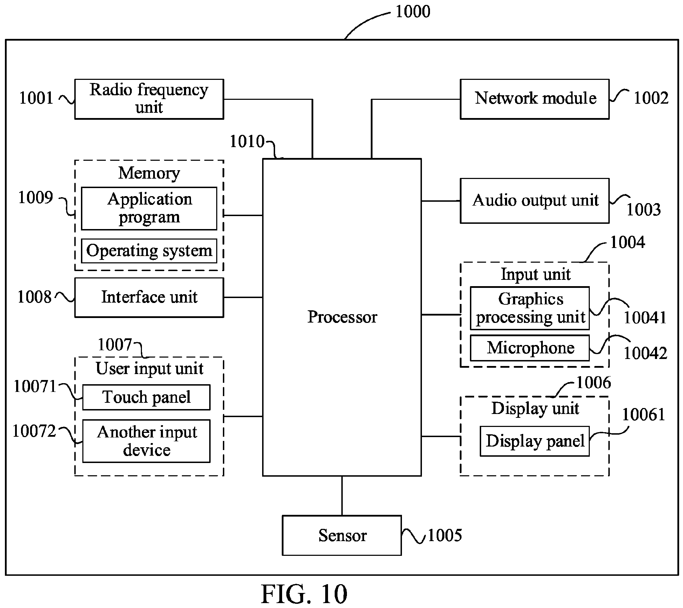

FIG. 10 is a diagram of a hardware structure of a mobile terminal according to an embodiment of this application.

The mobile terminal 1000 includes, but is not limited to: a radio frequency unit 1001, a network module 1002, an audio output unit 1003, an input unit 1004, a sensor 1005, a display unit 1006, a user input unit 1007, an interface unit 1008, a memory 1009, a processor 1010, or another component.

It may be understood by a person skilled in the art that the mobile terminal 1000 may further include a power supply (such as a battery) for supplying power to various components. The power supply may be logically connected to the processor 1010 through a power management system, so that functions such as charging management, discharging management, and power consumption management are implemented through the power management system. The structure of the mobile terminal shown in FIG. 10 does not constitute a limitation on the mobile terminal, and the mobile terminal may include more or fewer components than those shown in the figure, a combination of some components, or different component arrangements. Details are not described herein again.

The processor 1010 is configured to: obtain a voltage difference from an output end of a voltage comparator, where the voltage difference is a difference between a voltage at an input end of a voltage regulator and a voltage at an output end of the voltage regulator; control, in a case that the voltage difference is greater than a preset threshold, a charging path to be disconnected; and control, in a case that the voltage difference is less than or equal to the preset threshold, the charging path to be conducted.

In this embodiment of this application, the processor 1010 is configured to obtain the voltage difference from the output end of the voltage comparator, where the voltage difference is the difference between the voltage at the input end of the voltage regulator and the voltage at the output end of the voltage regulator. In a case that it is determined that the voltage difference is greater than the preset threshold, it is determined that the voltage difference between two ends of the voltage regulator 130 is large. In this case, it means that a wireless charging base is in a high-voltage output state and the mobile terminal is charged in a mismatched low-voltage slow charging mode. In this case, the voltage regulator 130 has a problem of serious heating. Further, because the voltage regulator 130 is a component in a wireless charging IC, the wireless charging IC of the mobile terminal tends to get burnt when the voltage regulator 130 has the problem of serious heating. In view of this, the charging path is controlled to be disconnected, to prevent the voltage regulator 130 from being continuously energized. On this basis, the voltage regulator 130 starts to cool down because of being in a non-working state, which avoids the case that the wireless charging IC of the mobile terminal tends to get burnt.

Correspondingly, in a case that the processor 1010 determines that the voltage difference is less than or equal to the preset threshold, it is determined that the voltage difference between the two ends of the voltage regulator 130 is small. In this case, it means that the wireless charging base is in the high-voltage output state and the mobile terminal is charged in a matched high-voltage fast charging mode, the wireless charging base is in a low-voltage output state and the mobile terminal is charged in a matched low-voltage slow charging mode, or the mobile terminal is in an uncharged state because of not being placed on the wireless charging base. In this case, the voltage regulator 130 does not have the problem of serious heating, so that the wireless charging IC of the mobile terminal does not have a problem of getting burnt. In view of this, the charging path is controlled to be conducted, to ensure that the charging circuit 100 can be normally charged.

Optionally, the processor 1010 is specifically configured to: control, in the case that the voltage difference is greater than the preset threshold, the charging path to be disconnected within a preset time period.

Optionally, in a case that the charging circuit 100 includes a first switch 170, the processor 1010 is specifically configured to: control, in the case that the voltage difference is greater than the preset threshold, the first switch 170 to be turned off; or control, in the case that the voltage difference is less than or equal to the preset threshold, the first switch 170 to be turned on.

Optionally, in a case that the charging circuit 100 includes a second switch 180, the processor 1010 is specifically configured to: control, in the case that the voltage difference is greater than the preset threshold, the second switch 180 to be turned off; or control, in the case that the voltage difference is less than or equal to the preset threshold, the second switch 180 to be turned on.

Optionally, in a case that a rectifier bridge 120 and the voltage regulator 130 are integrated on a wireless charging chip 123, the processor 1010 is specifically configured to: control, in the case that the voltage difference is greater than the preset threshold, the voltage regulator 130 to be turned off; or control, in the case that the voltage difference is less than or equal to the preset threshold, the voltage regulator 130 to be turned on.

Optionally, the processor 1010 is specifically configured to: control, in the case that the voltage difference is greater than the preset threshold, a charging management function of a power management module 140 to be turned off; or control, in the case that the voltage difference is less than or equal to the preset threshold, a charging management function of a power management module 140 to be turned on.

Optionally, in a case that the charging circuit 100 includes a third switch 190, the processor 1010 is specifically configured to: control, in the case that the voltage difference is greater than the preset threshold, the third switch 190 to be turned off; or control, in the case that the voltage difference is less than or equal to the preset threshold, the third switch 190 to be turned on.

It should be understood that, in this embodiment of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition apparatus (for example, a camera) in a video acquisition mode or an image acquisition mode. The display unit 1006 may include a display panel 10061. The display panel 10061 may be configured in the form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. Specifically, the another input device 10072 may include, but not limited to, a physical keyboard, a functional key (such as a volume control key or a switch key), a track ball, a mouse, and a joystick, which are not described herein in detail.

The memory 1009 may be configured to store a software program and various data. The memory 1009 may mainly include a first storage area for storing a program or instructions and a second storage area for storing data. The first storage area may store an operating system, an application program or instructions required for at least one function (for example, a sound playback function or an image display function), and the like. It can be understood that, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 1009 in this embodiment of this application includes, but not limited to, these memories and any other suitable type of memory.

The processor 1010 may include one or more processing units. Optionally, the processor 1010 may integrate an application processor and a modem processor, where the application processor mainly processes an operation related to an operating system, a user interface, an application program, and the like, and the modem processor such as a baseband processor mainly processes a wireless communication signal. It may be understood that the foregoing modem processor may not be integrated into the processor 1010.

An embodiment of this application further provides a readable storage medium. The readable storage medium stores a program or instructions. When the program or instructions are executed by a processor, the processes in embodiments of the control method for a charging circuit described above are implemented, and the same technical effects can be achieved. To avoid repetition, details are not described herein again.

The processor is the processor in the mobile terminal in the foregoing embodiments. The readable storage medium includes a computer-readable storage medium, such as a computer read-only memory ROM, a random access memory RAM, a magnetic disk, or an optical disk.

An embodiment of this application further provides a mobile terminal. The mobile terminal includes the charging circuit 100 provided in any one of the foregoing embodiments.

An embodiment of this application further provides a chip. The chip includes a processor and a communication interface. The communication interface is coupled to the processor. The processor is configured to run a program or instructions to implement the processes in embodiments of the control method for a charging circuit described above, and the same technical effects can be achieved. To avoid repetition, details are not described herein again.

It should be understood that the chip mentioned in this embodiment of this application may also be referred to as a system-level chip, a system chip, a chip system, or a system-on-a-chip.

An embodiment of this application provides a computer program product. The computer program product is stored in a storage medium. The program product is executed by at least one processor to implement the processes in embodiments of the control method for a charging circuit described above, and the same technical effects can be achieved. To avoid repetition, details are not described herein again.

It should be noted that, the terms "include", "have", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, an element defined by the sentence "including one" does not exclude that there are still other same elements in the process, method, article, or an apparatus that includes the element. Further, it should be noted that the scope of the method and apparatus in embodiments of this application is not limited to performing functions in an order shown or discussed, but may also include performing functions in a substantially simultaneous manner or in a reverse order depending on the functions involved. For example, the described method may be performed in an order other than the described order, and various steps may also be added, omitted, or combined. In addition, features described with reference to some examples may be combined in other examples.

According to the descriptions in the foregoing implementations, a person skilled in the art may clearly learn that the method in the foregoing embodiments may be implemented by relying on software plus a necessary universal hardware platform, or certainly, by using hardware. However, in most cases, the former is a preferred implementation. Based on such an understanding, the technical solutions of this application essentially or the part contributing to the conventional technology may be presented in the form of a computer software product. The computer software product is stored in a storage medium (for example, a ROM/RAM, a magnetic disk, or an optical disc) including several instructions to enable a terminal (which may be a mobile phone, a computer, a server, a network device, or the like) to perform the method described in embodiments of this application.

Embodiments of this application are described above with reference to the accompanying drawings. However, this application is not limited to the specific implementations described above, and the specific implementations described above are merely exemplary and not limitative. Inspired by this application, a person of ordinary skill in the art may make various variations without departing from the principle of this application and the protection scope of the claims, and such variations shall all fall within the protection scope of this application.

## Claims

1. A charging circuit, comprising: a wireless charging coil, a rectifier bridge, a voltage regulator, a power management module, a voltage comparator, and a first control module, wherein
the wireless charging coil, the rectifier bridge, the voltage regulator, and the power management module are sequentially connected in series to form a charging path;
the voltage regulator comprises an input end and an output end, wherein the input end of the voltage regulator is connected to the rectifier bridge, and the output end of the voltage regulator is connected to the power management module;
a first input end of the voltage comparator is connected to the input end of the voltage regulator, and a second input end of the voltage comparator is connected to the output end of the voltage regulator; and
an input end of the first control module is connected to an output end of the voltage comparator, and an output end of the first control module is connected to the charging path.

2. The charging circuit according to claim 1, wherein the charging circuit further comprises a first switch, wherein
the first switch is connected between the wireless charging coil and the rectifier bridge;
the output end of the first control module is connected to a control end of the first switch; and
the first control module is configured to control the first switch to be turned on or off.

3. The charging circuit according to claim 1, wherein the charging circuit further comprises a second switch, wherein
the second switch is connected between the voltage regulator and the power management module;
the output end of the first control module is connected to a control end of the second switch; and
the first control module is configured to control the second switch to be turned on or off.

4. The charging circuit according to claim 1, wherein the rectifier bridge and the voltage regulator are integrated on a wireless charging chip, and the output end of the first control module is connected to an enable end of the wireless charging chip; and
the first control module is configured to control the voltage regulator to be turned on or off.

5. The charging circuit according to claim 1, wherein the output end of the first control module is connected to an enable end of the power management module; and
the first control module is configured to control a charging management function of the power management module to be turned on or off.

6. The charging circuit according to claim 1, wherein the charging circuit further comprises a third switch, wherein
the third switch is connected between the rectifier bridge and the voltage regulator;
the output end of the first control module is connected to a control end of the third switch; and
the first control module is configured to control the third switch to be turned on or off.

7. A control method for a charging circuit, applied to the charging circuit according to any one of claims 1 to 6, wherein the control method comprises:
obtaining a voltage difference from the output end of the voltage comparator, wherein the voltage difference is a difference between a voltage at the input end of the voltage regulator and a voltage at the output end of the voltage regulator;
controlling, in a case that the voltage difference is greater than a preset threshold, the charging path to be disconnected; and
controlling, in a case that the voltage difference is less than or equal to the preset threshold, the charging path to be conducted.

8. The control method according to claim 7, wherein the controlling, in a case that the voltage difference is greater than a preset threshold, the charging path to be disconnected is specifically:
controlling, in a case that the voltage difference is greater than the preset threshold, the charging path to be disconnected within a preset time period.

9. A control apparatus for a charging circuit, applied to the charging circuit according to any one of claims 1 to 6, wherein the control apparatus comprises:
an obtaining module, configured to obtain a voltage difference from the output end of the voltage comparator, wherein the voltage difference is a difference between a voltage at the input end of the voltage regulator and a voltage at the output end of the voltage regulator; and
a second control module, configured to: control, in a case that the voltage difference is greater than a preset threshold, the charging path to be disconnected; and
control, in a case that the voltage difference is less than or equal to the preset threshold, the charging path to be conducted.

10. A mobile terminal, wherein the mobile terminal comprises the charging circuit according to any one of claims 1 to 6;
the mobile terminal comprises the control apparatus for the charging circuit according to claim 9; or
the mobile terminal comprises a processor and a memory, wherein the memory stores a program or instructions executable by the processor; and when the program or instructions are executed by the processor, the steps of the control method for the charging circuit according to claim 7 or 8 are implemented.

11. A readable storage medium, wherein the readable storage medium stores a program or instructions; and when the program or instructions are executed by a processor, the steps of the control method for the charging circuit according to claim 7 or 8 are implemented.

12. A mobile terminal, configured to implement the steps of the control method for the charging circuit according to claim 7 or 8.

13. A computer program product, wherein the computer program product is executed by at least one processor to implement the steps of the control method for the charging circuit according to claim 7 or 8.

14. A chip, comprising a processor and a communication interface, wherein the communication interface is coupled to the processor, and the processor is configured to run a program or instructions, to implement the steps of the control method for the charging circuit according to claim 7 or 8.
